(19) Europäisches Patentamt
European Patent Office
Office européen des brevets

(11) EP 2 378 514 A1

(12) EUROPEAN PATENT APPLICATION

(43) Date of publication:
19.10.2011 Bulletin 2011/42

(51) Int Cl.:
*G10L 15/18* (2006.01)

(21) Application number: 11002457.7

(22) Date of filing: 24.03.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.03.2010 US 732231

(71) Applicant: Mitsubishi Electric Corporation
Tokyo 100-8310 (JP)

(72) Inventor: Ezzat, Antoine
Newton, MA 02467 (US)

(74) Representative: Pfenning, Meinig & Partner GbR
Patent- und Rechtsanwälte
Theresienhöhe 13
80339 München (DE)

(54) **Method and system for constructing pronunciation dictionaries**

(57) Embodiments of the invention disclose a system and a method for constructing a pronunciation dictionary by transforming an unaligned entry to an aligned entry. The unaligned entry and the aligned entry include a set of words and a set of pronunciations corresponding to the set of words. The method aligns each word in the aligned entry with a subset of pronunciations by determining a pronunciation prediction for each word, such that there is one-to-one correspondence between the word and the pronunciation prediction; mapping each pronunciation prediction to the subset of pronunciations to produce a predictions-pronunciation map having each pronunciation prediction aligned with the subset of pronunciations; and determining the aligned entry based on the predictions-pronunciation map using the one-to-one correspondence between the word and the pronunciation prediction.

Fig. 2

## Description

### Field of the Invention

This invention relates generally to automatic speech recognition (ASR), and in particular to constructing pronunciation dictionaries for ASR.

### Background of the Invention

Information retrieval (IR) systems typically include a large list of items, such as geographic points of interest (POI), or music album titles. In response to a query supplied by a user, the IR system retrieves a result list that best matched the query. The result list can be rank ordered according various factors. The input list of items, query and result list are typically represented by text in the form of words.

Spoken queries are used in environments where a user cannot use a keyboard as part of a user interface, e.g., while driving or operating machinery, or the user is physically impaired. In this case, the user interface includes a microphone and an automatic speech recognizer (ASR) is used to convert speech to words.

The ASR uses two basic data structures, a pronunciation dictionary of words, and a language model of the words. Usually, the IR system represents the words phonetically as phonemes, e.g., RESTAURANT is represented as "R EH S T R AA N T." Phonemes refer to the basic units of sound in a particular language. The phonemes can include stress marks, syllable boundaries, and other notation indicative of how the words are pronounced.

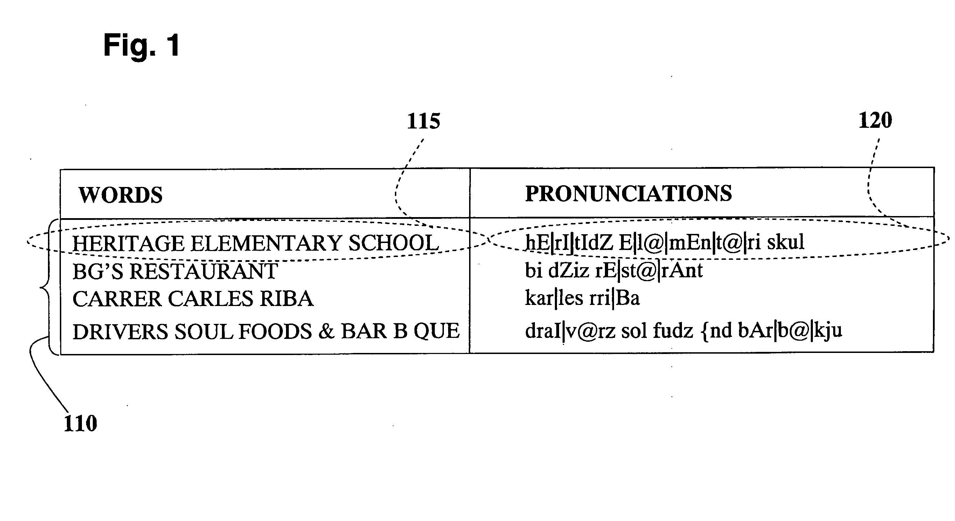

The pronunciation dictionary defines, for each word in a vocabulary of the ASR system, one or possibly several pronunciations for that word. Each of the items to be retrieved by the IR system has a corresponding pronunciation. Frequently, the pronunciations for these items are provided using a database of words. However, in most cases, the pronunciation dictionary is the form of an unaligned input file similar to one shown in Figure 1.

The input file includes a set of entries 110, where each entry includes a set of words 115 with corresponding pronunciations 120. However, the words are not aligned with corresponding pronunciations.

Conventional method performs the aligning by mapping each word to each pronunciation in sequential order of their appearance. For the example shown in Figure 1, the method maps a word "HERITAGE" to a pronunciation "hE|rI|tIdZ," a word "ELEMENTARY" to a pronunciation "E|1@|mEn|t@|ri," and a word "SCHOOL" to a pronunciation "skul." However, this method fails in a number of important situations, such as the following.

**More Pronunciations than Words:** In second line in Figure 1, the pronunciations "bi" and "dZiz" have to be map to the first word "BG'S."

**More Words than Pronunciations:** In third line, a word "CARRER" has no corresponding pronunciation and should be left unmapped.

**Erroneous Entries:** In fourth line, syllables in a pronunciation "bAr|b@|kju" have been merged into one word erroneously, instead of being left as three separate pronunciations to map to the words "BAR B QUE."

Accordingly, there is a need to provide a method for aligning the words with the pronunciations and to produce a pronunciation dictionary suitable for input to a speech recognizer.

### Summary of the Invention

It is an object of the subject invention to provide a method for aligning words to pronunciations to produce a pronunciation dictionary.

It is further object of the invention to provide such method that aligns the words automatically.

It is further object of the invention to produce a final pronunciation dictionary suitable for input to an automatic speech recognizer.

Embodiments of the invention are based on a realization that orthographic representations of words differs significantly from corresponding forms of pronunciations, which leads to mapping errors. Accordingly, the embodiments, instead of mapping the words to the pronunciations directly, determine a pronunciation prediction for each word, such that there is one-to-one correspondence between the word and the pronunciation prediction, and then, map the pronunciation prediction to the pronunciation. The embodiments take advantage from another realization, that a mapping between two phonetic forms is more accurate than a mapping between the orthographic and the phonetic forms.

One embodiments discloses a method for constructing a pronunciation dictionary by transforming an unaligned entry to an aligned entry, wherein the unaligned entry and the aligned entry include a set of words and a set of pronunciations corresponding to the set of words, and wherein each word in the aligned entry is aligned with a subset of pronunciations from the set of pronunciations, comprising the steps of: determining, for each word in the set of words, a pronunciation prediction, such that there is one-to-one correspondence between the word and the pronunciation prediction; mapping each pronunciation prediction to the subset of pronunciations to produce a predictions-pronunciation map having each pronunciation prediction aligned with the subset of pronunciations; and determining the aligned entry based on the predictions-pronunciation map using the one-to-one correspondence between the word and the pronunciation prediction.

Another embodiment discloses a method for constructing a pronunciation dictionary from a set of unaligned entries, wherein an unaligned entry includes a set of words and a set of pronunciations corresponding to the set of words, comprising the steps of: transforming iteratively each unaligned entry into an aligned entry, wherein each word in the aligned entry is aligned with a subset of pronunciations from the set of pronunciations; storing each aligned entry in an internal dictionary; and outputting the internal dictionary as the pronunciation dictionary, wherein the steps of the method are performed by a processor.

Yet another embodiment discloses a system for constructing a pronunciation dictionary by transforming an unaligned entry to an aligned entry, wherein the unaligned entry and the aligned entry include a set of words and a set of pronunciations corresponding to the set of words, and wherein each word in the aligned entry is aligned with a subset of pronunciations from the set of pronunciations, comprising: pronunciation prediction sub-module for determining, for each word in the set of words, a pronunciation prediction, such that there is one-to-one correspondence between the word and the pronunciation prediction; dynamic programming sub-module for mapping each pronunciation prediction to the subset of pronunciations to produce a predictions-pronunciation map having each pronunciation prediction aligned with the subset of pronunciations; and a processor configured for determining the aligned entry based on the predictions-pronunciation map using the one-to-one correspondence between the word and the pronunciation prediction.

**Brief Description of the Drawings**

Figure 1 is block diagram of a conventional input file including unaligned entries;

Figure 2 is a flow diagram of a method for transforming an unaligned entry to an aligned entry according to embodiments of the invention;

Figure 3 is a table of an aligned entries corresponding to the unaligned entries shown in Figure 1;

Figure 4 is a flow diagram of a method for determining a pronunciation dictionary according to one embodiment of the invention;

Figure 5 is a flow diagram of a transformation module according to one embodiment of the invention;

Figures 6A-6B are tables of the unaligned entries;

Figures 7A-7B are tables of pronunciation predictions of the words.

Figures 8A-8B are tables of pronunciations and syllables;

Figure 9A-9B are block diagrams of examples of chunks and strings organization;

Figure 10 is a graph of an alignment path resulted of an example dynamic programming according embodiments of the invention;

Figure 11 is table of an A-letter-to-B-chunk mapping according embodiments of the invention;

Figure 12 is flow diagram of resolving the A-letter-to-B-chunk map according embodiments of the invention;

Figures 13A-13B are tables of words and aligned syllables;

Figures 14A-14B are examples of a unpruned and pruned dictionaries; and

Figure 15 is a pseudocode code for determining an alignment path according one embodiment of the invention.

**Detailed Description of the Preferred Embodiment**

**System Overview**

Embodiments of the invention are based on a realization that orthographic representations of words differ significantly from corresponding forms of pronunciations, which leads to errors in mapping the words to the pronunciations. Accordingly, in the embodiments, instead of mapping the words to the pronunciations directly, a pronunciation prediction is determined for each word, such that there is one-to-one correspondence between the word and the pronunciation prediction, and, then, the pronunciation prediction is mapped to the pronunciation. The embodiments take advantage from another realization, that a mapping between two phonetic forms is more accurate than a mapping between the orthographic and the phonetic forms.

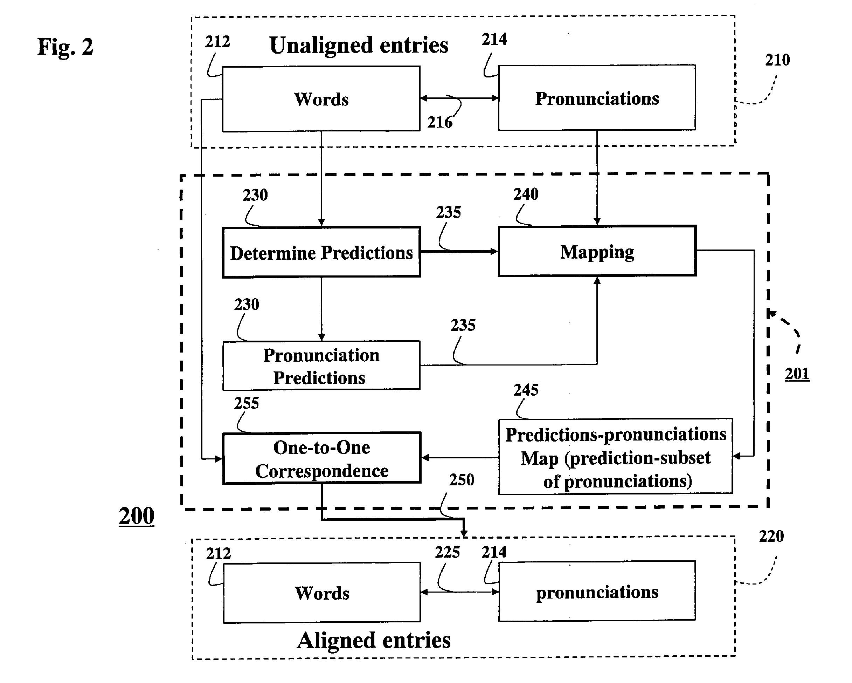

Figure 2 shows a method for transforming an unaligned entry 210 to an aligned entry 220 according to embodiments of the invention. The method is executed by a transformation module 200 using a processor 201 as known in the art. The unaligned entry includes a set of words 212 and a set of pronunciations 214 corresponding 216 to the set of words. However, the words and the pronunciations in the unaligned entry are not aligned. As defined herein, the set of words are aligned to the set of pronunciations, if each word in the set of words is mapped to a subset of pronunciations from the set of pronunciations. In various embodiments, the subset of pronunciations includes zero or more pronunciations.

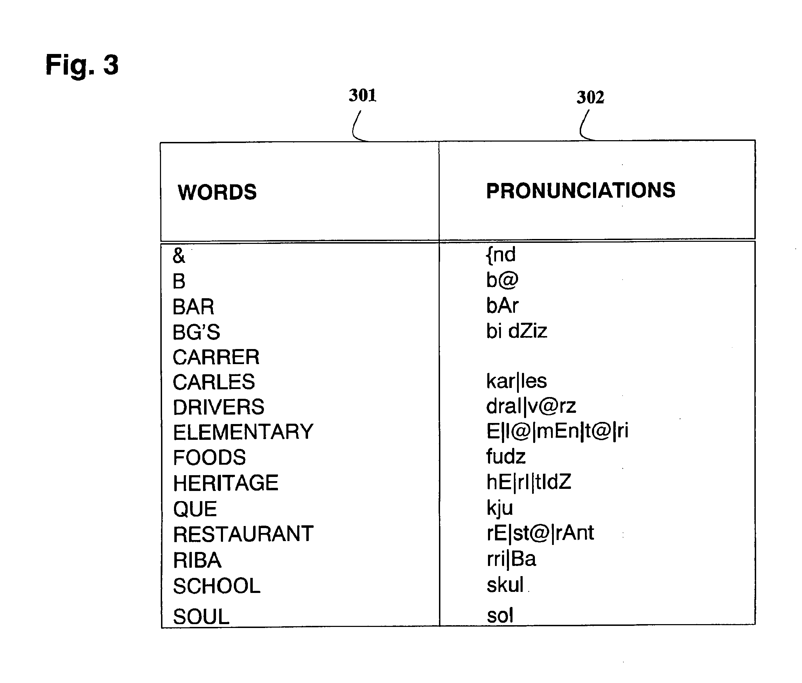

Figure 3 shows an example of the aligned entry 220 that corresponds to the example of the unaligned entry shown in Figure 1. The words in a left hand column 301 are aligned with the pronunciations from a right hand column 302. In various embodiments of the invention, the unaligned entry includes equal or different number of words and pronunciations.

According to the aforementioned objectives, pronunciation predictions 235 are determined 230 for each word from the set of words, such that there is one-to-one correspondence between the word and the pronunciation prediction. Each pronunciation prediction is mapped 240 to a subset of pronunciations producing a predictions-pronunciations map 245 having each pronunciation prediction aligned with the subset of pronunciations. The aligned entry is determined 250 from the pronunciation predictions-pronunciations map based on the one-to-one correspondence 255 such that the words in the aligned entry are aligned 225 to the pronunciations. The words in the aligned entry are identical to the words in the unaligned entry. However, the pronunciations in the aligned entry can differ from the pronunciations in the unaligned entry. In various embodiments, the pronunciations are partitioned into smaller components, e.g., syllables, and rearranged accordingly, as described in more details below.

**Determining Pronunciation Dictionary**

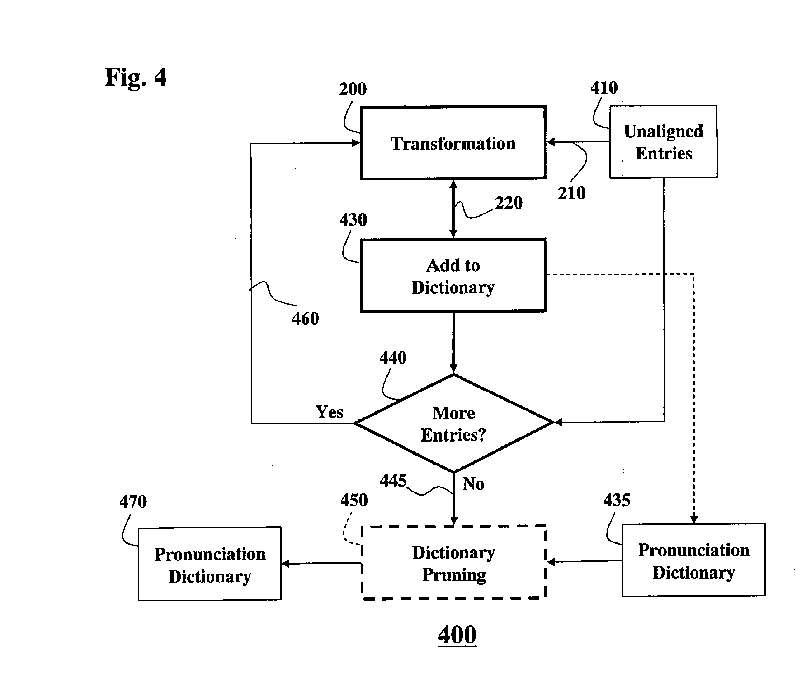

Figure 4 shows a method 400 for constructing a pronunciation dictionary 470 according to one embodiment of the invention. The method iterates over a set of unaligned entries 410 stored in a memory (not shown). Each unaligned entry 210 is transformed to the aligned entry 220 by the transformation module 200. The aligned entry is added 430 to an internal dictionary 435 maintained by the method during the iterations 460. When 440 all unaligned entries are transformed 445, the internal dictionary is outputted as the pronunciation dictionary 470. In one embodiment, before the outputting, a pruning module 450 prunes the internal dictionary such that word-pronunciation mappings having a low accuracy are removed.

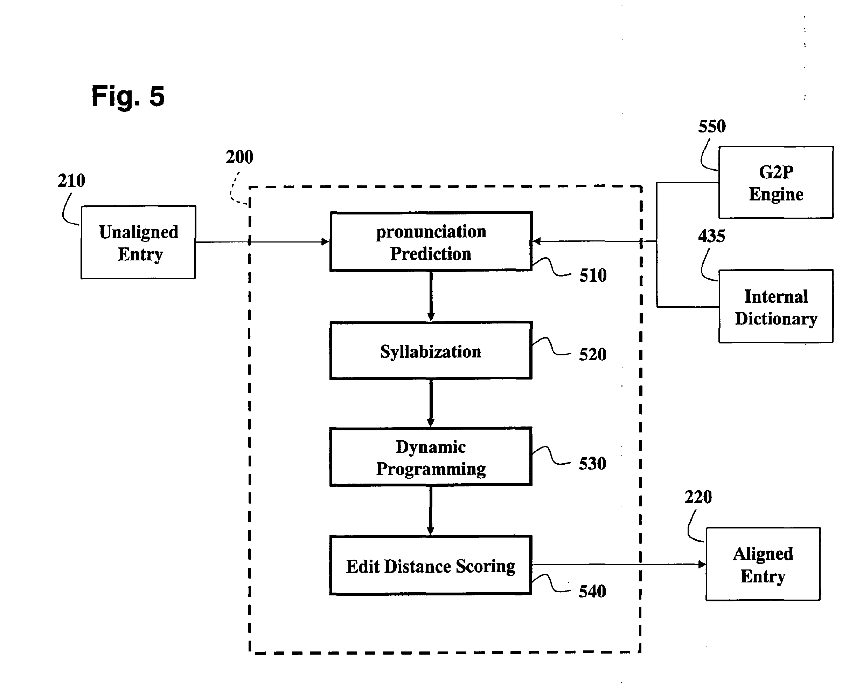

Figure 5 shows an example of the transformation module. In one embodiment, the transformation module includes a pronunciation prediction sub-module 510, a syllabization sub-module 520, a dynamic programming (DP) sub-module 530, and an edit distance (ED) sub-module 540. Operation of the transformation module is illustrated with the following example.

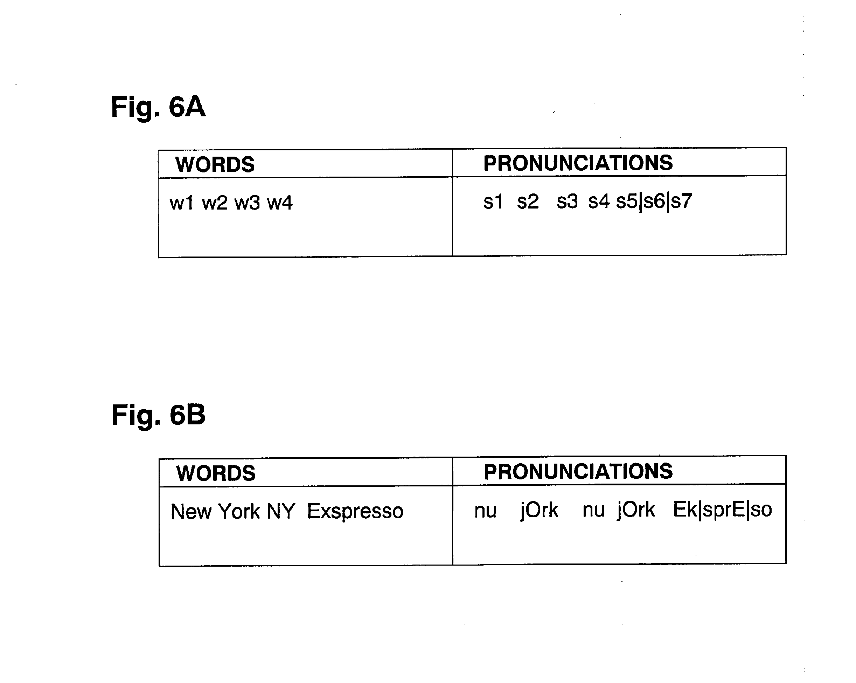

Figure 6B shows an example of the unaligned entry. The words in the unaligned entry are "New York NY Exspresso", and the corresponding pronunciations are "nu jOrk nu jOrk Ek|sprE|so". In this example, the number of the pronunciations is greater than the number of the words.

Figure 6A shows the example as in Figure 6B written in symbols, wherein the pronunciations $p_i$ are represented as a concatenation of syllables $S_j S_k$. The variable $i$ is an index of a pronunciation in the set of the pronunciations, and the variables $j$ and $k$ are indices of syllables of the pronunciations.

**Pronunciation Prediction Sub-Module**

The pronunciation prediction sub-module makes a pronunciation prediction for each word in the unaligned entry. In various embodiments, the pronunciation predictions are derived from at least one of several sources. The first source is the internal dictionary 435. The pronunciation prediction sub-module determines whether the word-pronunciation map for the word exists in the internal dictionary and selects the most frequent pronunciation of the word as the pronunciation prediction for that word. To that end, one embodiment includes a frequency count $c(w, p)$ indicating number of times the word-pronunciation map has occurred thus far. If the pronunciation is selected as the pronunciation prediction, then - the frequency count of the word-pronunciation map is increased, e.g., by 1.

Additionally or alternatively, one embodiment uses a grapheme-to-phoneme (G2P) engine 550 to determine the pronunciation prediction for the words. The embodiment is advantageous when the word occurs rarely, and/or at the beginning of the transformation 200. For example, one embodiment uses sequitur G2P engine 550, which is a data-driven grapheme-to-phoneme converter developed at RWTH Aachen University - Department of Computer Science, see M. Bisani and H. Ney. "Joint-Sequence Models for Grapheme-to-Phoneme Conversion," Speech Communication, Volume 50, Issue 5, May 2008, Pages 434-451, incorporated herein by reference.

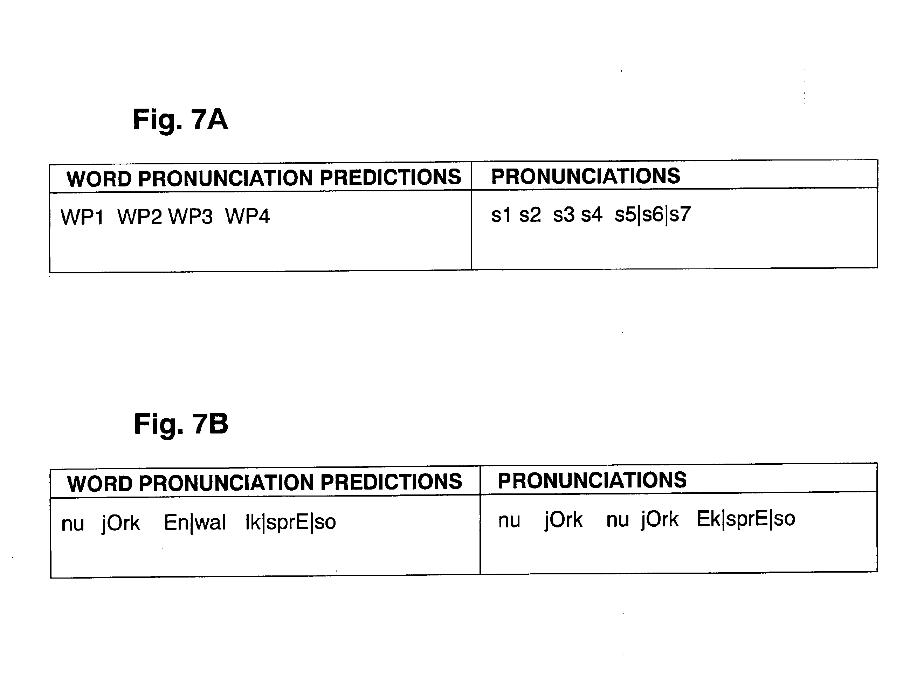

Additionally or alternatively, one embodiment uses an orthographic form of the word as the pronunciation prediction of that word. Figures 7A and 7B show examples of the pronunciation predictions.

**Syllabization Sub-Module**

The syllabization sub-module 520 organizes the pronunciations in the unaligned entry into individual syllables. The syllabization accounts for a problem of erroneous entries, i.e., the syllables of the pronunciations are merged erroneously into one word. Organizing the pronunciations into syllables enables re-alignment of the pronunciations to correct that problem.

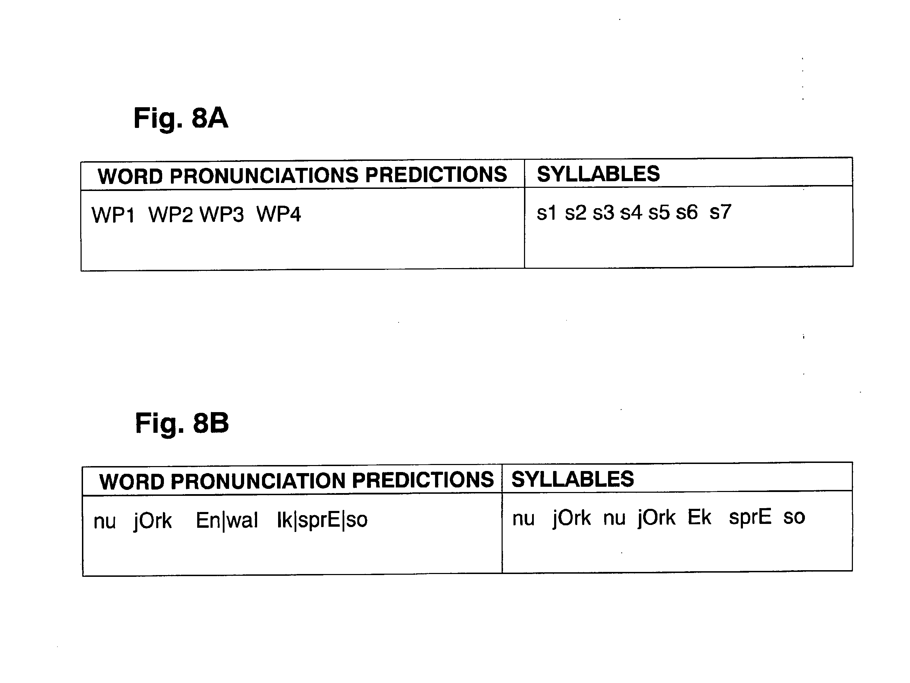

In one embodiment, the pronunciations are concatenated syllables separated by concatenation symbols, e.g., "|", and the syllabization sub-module replaces the concatenation symbols with a whitespace. Additionally or alternatively, a separate syllabization product is used for the syllabization. For example, one embodiment uses a syllabification tool developed by National Institute of Standards and Technology (NIST). Figures 8A and 8B show examples of the syllabization.

**Dynamic Programming Sub-module**

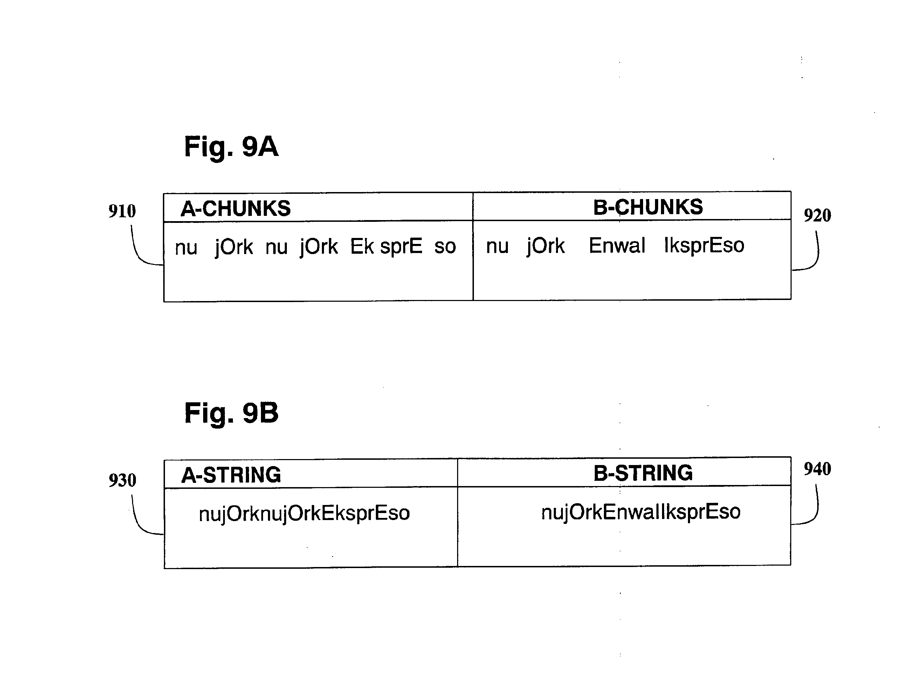

As a matter of terminology only, the syllables of each pronunciation are referred as an A-chunk. Similarly, the pronunciation prediction is referred as a B-chunk. Concatenations of the A-chunks and the B-chunks are referred as an A-string formed by A-letters and a B-string formed by B-letters, respectively. Figure 9A shows examples of the A-chunks 910 and the B-chunks 920. Figure 9B shows examples of the A-string 930 and the B-string 940.

The dynamic programming sub-module determines an alignment path with minimal edit distance between the letters in the A-string, and the letters in the B-string. The edit distance, also called Levenshtein distance, between two strings is defined as minimum number of edit operations required to transform a first string to a second string, with the allowable edit operations being insertion, deletion, or substitution of a single symbol at a time.

The edit distance is determined via dynamic programming employed by the dynamic programming sub-module. If the lengths of the symbol sequences are $n$ and $m$ respectively, the dynamic programming involves determining entries of a matrix of size $n \times m$. The dynamic programming sub-module determines recursively every element in the matrix based on a minimum of insertion, deletion, and substitution costs. After all elements in the matrix are determined, the bottom-right-most element in the matrix is the edit distance between the two strings. In various embodiments, the costs of insertion, deletion, and substitution are identical or different.

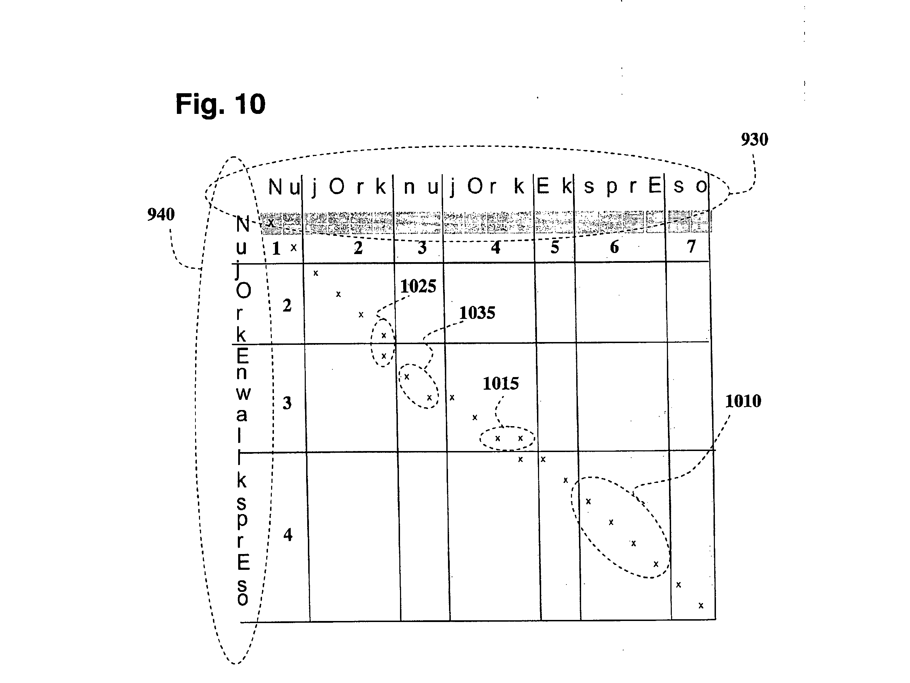

Figure 10 shows the alignment path with the minimal edit distance between the A-string 930 and the B-string 940. The alignment path is marked by asterisks 1010. To determine the alignment path, the dynamic programming sub-module keeps track of the elements, i.e., the elements representing the insertion, the deletion, or the substitution costs, minimizing the cost of alignment at each point in the matrix. For example, one embodiment determines two matrices, i.e., a cost matrix representing the costs, and an index matrix representing indices of the elements minimizing the cost.

After all elements of the matrix are determined, a path starting from the bottom-right-most element in the index matrix is retraced backwards by following the indices of the elements to identify the alignment path between the strings. The asterisks 1010 are points along the alignment path.

When the element in the index matrix represents the deletion, two asterisks 1015 are placed side-by-side horizontally on the alignment path. Referring to Figure 10, these two asterisks indicate that elements $j$ and $j$+1 from the string 930 are both mapped to the element $i$ from the string 940, i.e., the element $j$ is deleted from the mapping between the strings.

When the element in the index matrix represents the insertion, two asterisks 1025 are placed side-by-side vertically on the alignment path. These two asterisks indicate that element $j$ from the string 930 is mapped to the element $i$ and $i$+1 from the string 940, i.e., the element $j$ is inserted twice in the mapping between the strings.

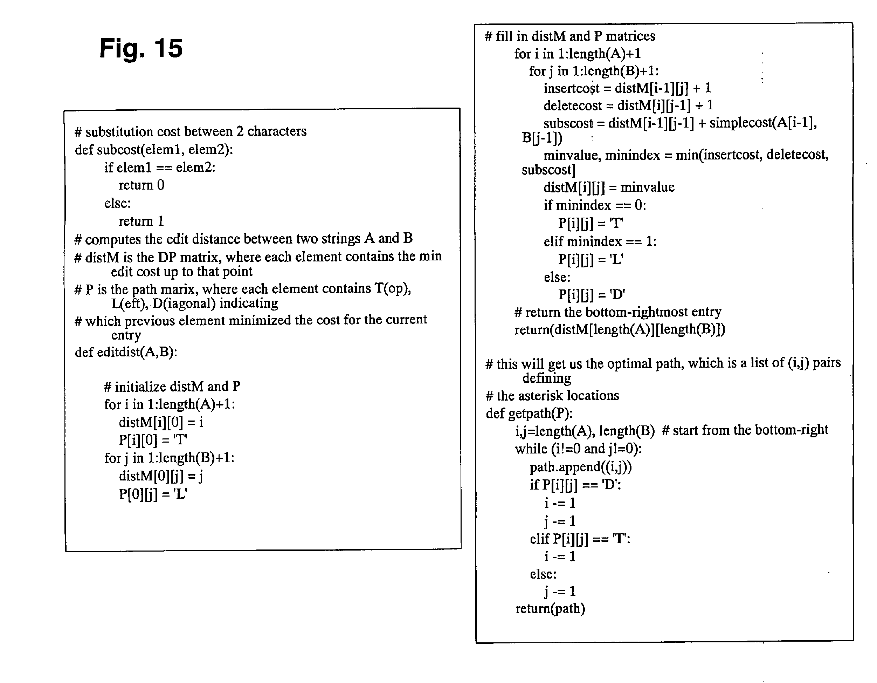

When the element in the index matrix represents the substitution, two asterisks 1035 are placed side-by-side diagonally on the alignment path. These two asterisks indicate that element $j$ from the string 930 is mapped to the element $i$ from the string 940, and the element $j$+1 is mapped to the element $i$+1. Figure 15 shows a pseudocode code for determining the alignment path according one embodiment of the invention.

**Edit Distance Sub-module**

The Edit distance sub-module produces a one-to-one mapping among the B-chunks and the A-chunks. The mapping is produced based on the alignment path provided by the dynamic programming sub-module. Initially, an A-letter-to-B-chunk map is generated, which identifies, for each A- or B-string letter, the corresponding A- or B-chunk to which the letter belongs. For example, as shown in Figure 10, an A-letter /N/ maps to B-chunk 1, an A-letter /u/ maps to B-chunk 1, an A-letter /j/ maps to B-chunk 2, and so on. In some cases, however, the dynamic programming maps one A-letter to multiple B-chunks. For example, an A-letter /k/ is mapped to the B-chunk 2 and the B-chunk 3.

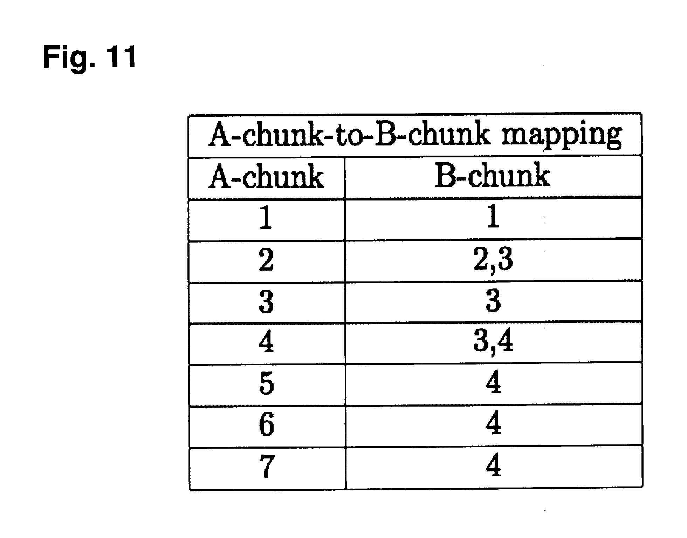

Based on the A-letter-to-B-chunk map, an A-chunk-to-B-chunk map is determined, as shown in Figure 11. The A-chunk-to-B-chunk map is determined as follows: if all the letters from a single A-chunk are mapped to a single B-chunk, then that A-chunk is mapped to the corresponding B-chunk. For example, the A-chunk 1 is mapped to the B-chunk 1. If the letters in an A-chunk map to multiple B-chunks, then that A-chunk maps to multiple B-chunks. For example, the A-chunk 2 is mapped to the B-chunk 2 and to the B-chunk 3.

If the A-letter-to-B-chunk map is a one-to-one chunk map, i.e., each A-chunk is mapped to no more than one B-chunk, then the prediction-pronunciation map 245 is formed and the aligned entry is determined based on this map. However, if at least one A-chunk is mapped to multiple B-chunks, i.e., a one-to-many chunk map, as in Figure 11, the A-letter-to-B-chunk map needs to be resolved to the one-to-one chunk map.

One embodiment resolves the A-letter-to-B-chunk map by determining a Cartesian product of one-to-one chunk maps of A-chunks to B-chunks mapping allowed by the one-to-many chunk map, calculating a cumulative edit distance of each one-to-one chunk map, and selecting the one-to-one chunk map with the lowest cumulative edit distance.

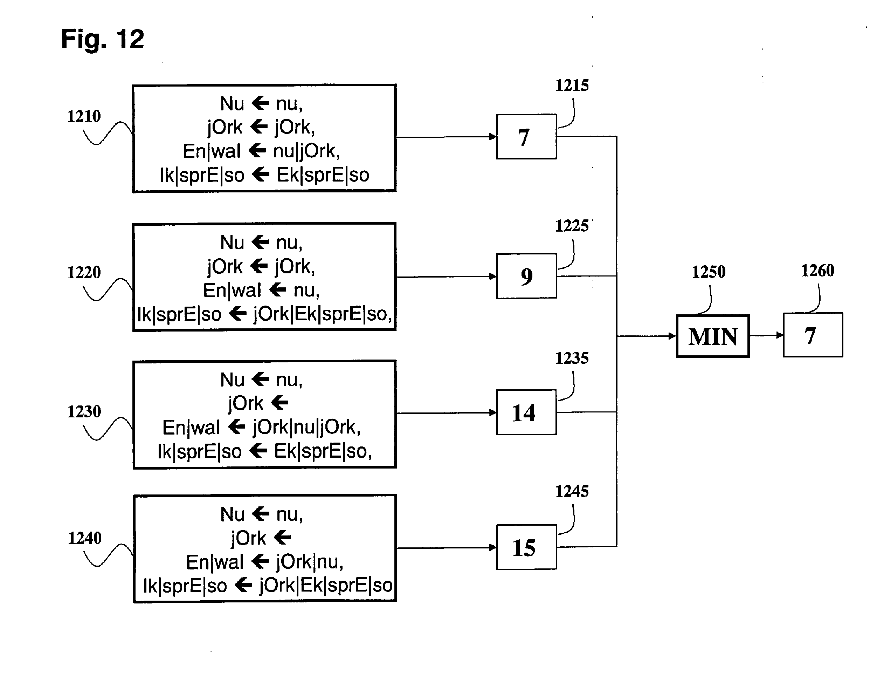

Figure 12 shows a method for resolving the A-letter-to-B-chunk map, wherein the A-letter-to-B-chunk map is the one-to-many chunk map. For each one-to-one chunk map 1210-1240, the edit distances between mapped A- and B-chunks are determined and summed up to produce the cumulative edit distance 1215-1245. The cumulative edit score having a minimal 1250 value 1260 determines a resolved A-chunk-B-chunk mapping. In this example the mapping 1210 is selected as the resolved mapping, because the mapping 1210 has the lowest cumulative edit score, i.e., 7.

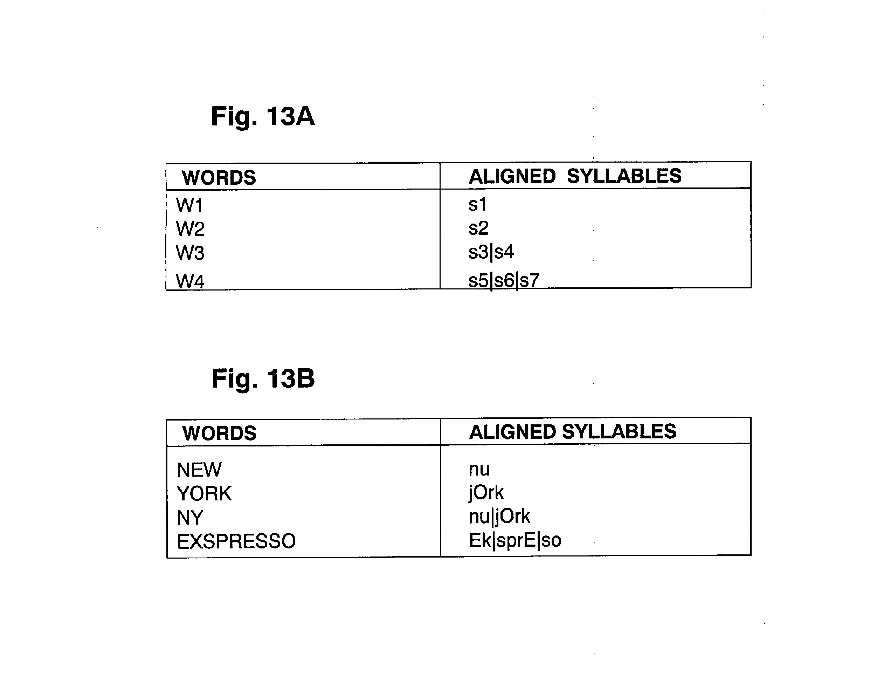

Figures 13A-13B show an example of the aligned entry outputted by the transformation module. The transformation module has aligned a word "New" with a pronunciation "nu", a word "York" with a pronunciation "jOrk", a word "NY" with a pronunciation "nu|jOrk", and a word "Exspresso" with a pronunciation "Ek|sprE|so".

**Pruning Module**

The pruning module 450 prunes the internal dictionary such that word-pronunciation mappings having a low accuracy are removed. One embodiment prunes the word-pronunciation mappings based on the frequency count c($w$, $p$) described above. Each frequency count $c$($w$, $p$) is converted into a probability $P$($w$, $p$) that a word $w$ is mapped to a pronunciation $p$ by dividing by a sum of all frequency counts determined for that word $w$ with all other pronunciations $q$ according to

$$P(w,p) = \frac{c(w,p)}{\sum\limits_{q} c(w,q)}.$$

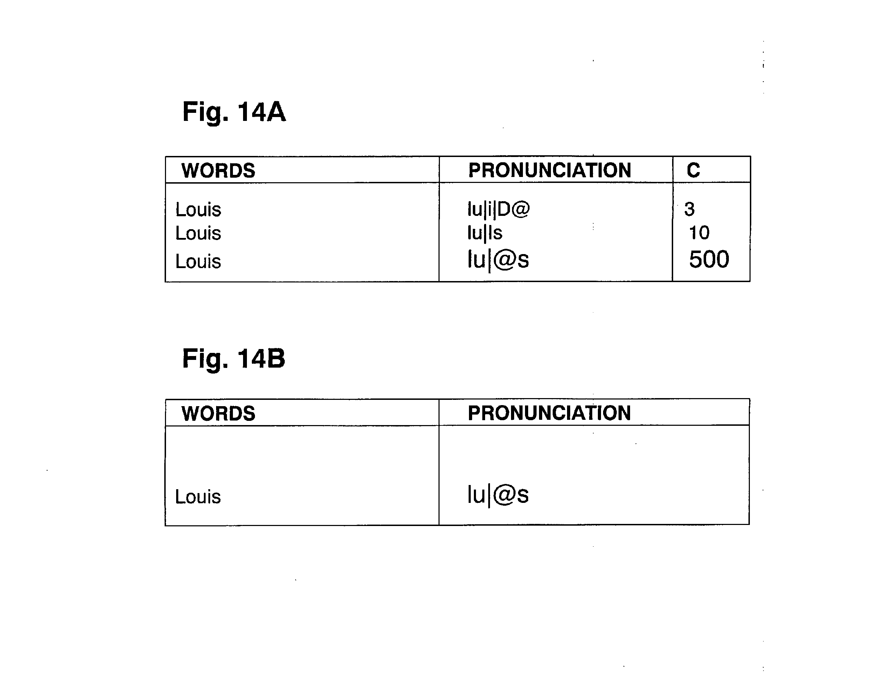

A word-pronunciation mapping with the probability P below a specified threshold is removed from the internal dictionary, and, accordingly, from the pronunciation dictionary. Figures 14A-14B show an example of the pruning.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

**Claims**

1. A method for constructing a pronunciation dictionary (470) by transforming an unaligned entry (210) to an aligned entry (220), wherein the unaligned entry (210) and the aligned entry (220) include a set of words (212) and a set of pronunciations (214) corresponding to the set of words (212), and wherein each word in the aligned entry (220) is aligned with a subset of pronunciations from the set of pronunciations (214), comprising the steps of:

   determining, for each word in the set of words (212), a pronunciation prediction (235), such that there is one-to-one correspondence (255) between the word and the pronunciation prediction (235);
   mapping each pronunciation prediction (235) to the subset of pronunciations to produce a predictions-pronunciation map (245) having each pronunciation prediction (235) aligned with the subset of pronunciations; and
   determining the aligned entry (220) based on the predictions-pronunciation map (245) using the one-to-one correspondence (255) between the word and the pronunciation prediction (235), wherein the steps of the method are performed by a processor.

2. The method of claim 1, wherein the pronunciations and predictions are represented as a concatenation of syllables, further comprising:

   concatenating the syllables of the pronunciations in the set of pronunciations (214) forming an A-string, wherein the syllables of a pronunciation form an A-chunk;
   concatenating syllables of the pronunciation predictions (235) forming a B-string, wherein the syllables of the pronunciation prediction (235) form a B-chunk;
   determining an alignment path between letters in the A-string and letters in the B-string;
   determining an A-chunk-to-B-chunk map based on the alignment path; and
   determining the predictions-pronunciation map (245) based on the A-chunk-to-B-chunk map.

3. The method of claim 2, wherein the A-chunk-to-B-chunk map is a one-to-one chunk map.

4. The method of claim 2, wherein the A-chunk-to-B-chunk map is a one-to-many chunk map, further comprising:

   resolving the A-chunk-to-B-chunk map into a one-to-one chunk map.

5. The method of claim 4, wherein the resolving further comprising:

   determining a Cartesian product of one-to-one chunk maps of A-chunks to B-chunks mapping allowed by the one-to-many chunk map;
   calculating a cumulative edit distance of each one-to-one chunk map; and
   selecting the one-to-one chunk map with a lowest cumulative edit distance.

6. The method of claim 5, further comprising determining an edit distance for each mapping in each one-to-one chunk map to produce edit distances of each one-to-one chunk map; and determining the cumulative edit distance by summing up the edit distances of each one-to-one chunk map.

7. The method of claim 1, further comprising:

   selecting the pronunciation prediction (235) from an internal dictionary.

8. The method of claim 1, further comprising:

   determining the pronunciation prediction (235) using a grapheme-to-phoneme converter.

9. The method of claim 1, further comprising:

   selecting an orthographic form of the word as the pronunciation prediction (235) of that word.

**10.** The method of claim 2, further comprising:

> determining an a cost matrix representing costs of insertion, deletion, and substitution between the letters in the A-string and the letters in the B-string;
> determining an index matrix representing indices of the elements minimizing the costs; and
> determining the alignment path based on the index matrix.

**11.** The method of claim 10, wherein the alignment path is a path starting from a bottom-right-most element in the index matrix and retraced backwards by following the indices of the elements minimizing the costs.

**12.** The method of claim 11, wherein the element in the index matrix represents the cost of the deletion, further comprising:

> placing two asterisks side-by-side horizontally on the alignment path.

**13.** The method of claim 11, wherein the element in the index matrix represents the cost of the insertion, further comprising:

> placing two asterisks side-by-side vertically on the alignment path.

**14.** The method of claim 11, wherein the element in the index matrix represents the cost of the substitution, further comprising:

> placing two asterisks side-by-side diagonally on the alignment path.

**15.** The method of claim 1, wherein the aligned entry (220) includes a set of word-pronunciation mappings, further comprising:

> removing a word-pronunciation mapping having a probability below a threshold.

**16.** The method of claim 15, further comprising determining, for each word in the set of words (212), a frequency count $c(w, p)$, wherein the frequency count indicates a number of mappings between a word $w$ and a pronunciation $p$;
determining the probability $P(w, p)$ of the word-pronunciation mapping between the word $w$ and the pronunciation $p$ based on the frequency count $c(w, p)$ and frequency counts of the word with pronunciations $q$ according to

$$P(w,p) = \frac{c(w,p)}{\sum_q c(w,q)}$$

**17.** A method for constructing a pronunciation dictionary (470) from a set of unaligned entries, wherein an unaligned entry (210) includes a set of words (212) and a set of pronunciations (214) corresponding to the set of words (212), comprising the steps of:

> transforming iteratively each unaligned entry (210) into an aligned entry (220), wherein each word in the aligned entry (220) is aligned with a subset of pronunciations from the set of pronunciations (214);
> storing each aligned entry (220) in an internal dictionary; and
> outputting the internal dictionary as the pronunciation dictionary (470), wherein the steps of the method are performed by a processor.

**18.** The method of claim 17, wherein the transforming further comprising:

> determining for each word in the set of words (212) a pronunciation prediction (235), such that there is one-to-one correspondence (255) between the word and the pronunciation prediction (235);
> mapping each pronunciation prediction (235) to the subset of pronunciations (214) to produce a predictions-pronunciation map (245) having each pronunciation prediction (235) aligned with the subset of pronunciations; and
> determining the aligned entry (220) based on the predictions-pronunciations map (245) using the one-to-one correspondence (255) between the word and the pronunciation prediction (235).

**19.** The method of claim 17, wherein the aligned entry (220) includes a set of word-pronunciation mappings, further comprising:

> removing a word-pronunciation mapping having a probability below a threshold.

**20.** A system for constructing a pronunciation dictionary (470) by transforming an unaligned entry (210) to an aligned entry (220), wherein the unaligned entry (210) and the aligned entry (220) include a set of words (212) and a set of pronunciations (214) corresponding to the set of words (212), and wherein each word in the aligned entry (220) is aligned with a subset of pronunciations from the set of pronunciations (214), comprising:

pronunciation prediction (235) sub-module for determining, for each word in the set of words (212), a pronunciation prediction (235), such that there is one-to-one correspondence (255) between the word and the pronunciation prediction (235);

dynamic programming sub-module for mapping each pronunciation prediction (235) to the subset of pronunciations to produce a predictions-pronunciation map (245) having each pronunciation prediction (235) aligned with the subset of pronunciations; and

a processor configured for determining the aligned entry (220) based on the predictions-pronunciation map (245) using the one-to-one correspondence (255) between the word and the pronunciation prediction (235).

**Fig. 1**

115      120

| WORDS | PRONUNCIATIONS |
|---|---|
| HERITAGE ELEMENTARY SCHOOL | hE\|rI\|tIdZ E\|l@\|mEn\|t@\|ri skul |
| BG'S RESTAURANT | bi dZiz rE\|st@\|rAnt |
| CARRER CARLES RIBA | kar\|les rri\|Ba |
| DRIVERS SOUL FOODS & BAR B QUE | draI\|v@rz sol fudz {nd bAr\|b@\|kju |

110

EP 2 378 514 A1

**Fig. 2**

# Fig. 3

|                    301                    |                    302                    |
|-------------------------------------------|-------------------------------------------|
| **WORDS**                                 | **PRONUNCIATIONS**                        |
| &                                         | {nd                                       |
| B                                         | b@                                        |
| BAR                                       | bAr                                       |
| BG'S                                      | bi dZiz                                   |
| CARRER                                    |                                           |
| CARLES                                    | kar\|les                                  |
| DRIVERS                                   | draI\|v@rz                                |
| ELEMENTARY                                | E\|I@\|mEn\|t@\|ri                        |
| FOODS                                     | fudz                                      |
| HERITAGE                                  | hE\|rI\|tIdZ                              |
| QUE                                       | kju                                       |
| RESTAURANT                                | rE\|st@\|rAnt                             |
| RIBA                                      | rri\|Ba                                   |
| SCHOOL                                    | skul                                      |
| SOUL                                      | sol                                       |

**Fig. 4**

Unaligned Entries — 410

Transformation — 200

Add to Dictionary — 430

More Entries? — 440

Yes — 460

No — 445

Pronunciation Dictionary — 435

Dictionary Pruning — 450

Pronunciation Dictionary — 470

210

220

400

**Fig. 5**

210 Unaligned Entry

200

550 G2P Engine

435 Internal Dictionary

510 pronunciation Prediction

520 Syllabization

530 Dynamic Programming

540 Edit Distance Scoring

220 Aligned Entry

# Fig. 6A

| WORDS | PRONUNCIATIONS |
|---|---|
| w1 w2 w3 w4 | s1  s2   s3  s4 s5\|s6\|s7 |

EP 2 378 514 A1

# Fig. 6B

| WORDS | PRONUNCIATIONS |
|---|---|
| New York NY  Exspresso | nu   jOrk   nu  jOrk  Ek\|sprE\|so |

## Fig. 7A

| WORD PRONUNCIATION PREDICTIONS | PRONUNCIATIONS |
|---|---|
| WP1  WP2 WP3  WP4 | s1 s2  s3 s4  s5\|s6\|s7 |

## Fig. 7B

| WORD PRONUNCIATION PREDICTIONS | PRONUNCIATIONS |
|---|---|
| nu  jOrk   En\|wal   Ik\|sprE\|so | nu    jOrk   nu jOrk  Ek\|sprE\|so |

EP 2 378 514 A1

## Fig. 8A

| WORD PRONUNCIATIONS PREDICTIONS | SYLLABLES |
|---|---|
| WP1  WP2 WP3  WP4 | s1 s2 s3 s4 s5 s6  s7 |

## Fig. 8B

| WORD PRONUNCIATION PREDICTIONS | SYLLABLES |
|---|---|
| nu  jOrk   En\|wal   Ik\|sprE\|so | nu  jOrk  nu  jOrk  Ek   sprE  so |

EP 2 378 514 A1

## Fig. 9A

| A-CHUNKS | B-CHUNKS |
|---|---|
| nu  jOrk  nu  jOrk  Ek sprE  so | nu  jOrk    Enwal    IksprEso |

910 (A-CHUNKS)  920 (B-CHUNKS)

## Fig. 9B

| A-STRING | B-STRING |
|---|---|
| nujOrknujOrkEksprEso | nujOrkEnwalIksprEso |

930 (A-STRING)  940 (B-STRING)

EP 2 378 514 A1

# Fig. 10

**Fig. 11**

| A-chunk-to-B-chunk mapping | |
|---|---|
| A-chunk | B-chunk |
| 1 | 1 |
| 2 | 2,3 |
| 3 | 3 |
| 4 | 3,4 |
| 5 | 4 |
| 6 | 4 |
| 7 | 4 |

EP 2 378 514 A1

Fig. 12

## Fig. 13A

| WORDS | ALIGNED SYLLABLES |
|-------|-------------------|
| W1 | s1 |
| W2 | s2 |
| W3 | s3\|s4 |
| W4 | s5\|s6\|s7 |

## Fig. 13B

| WORDS | ALIGNED SYLLABLES |
|-------|-------------------|
| NEW | nu |
| YORK | jOrk |
| NY | nu\|jOrk |
| EXSPRESSO | Ek\|sprE\|so |

EP 2 378 514 A1

## Fig. 14A

| WORDS | PRONUNCIATION | C |
|-------|---------------|-----|
| Louis | lu\|i\|D@ | 3 |
| Louis | lu\|ls | 10 |
| Louis | lu\|@s | 500 |

## Fig. 14B

| WORDS | PRONUNCIATION |
|-------|---------------|
| Louis | lu\|@s |

EP 2 378 514 A1

# Fig. 15

```
# substitution cost between 2 characters
def subcost(elem1, elem2):
    if elem1 == elem2:
        return 0
    else:
        return 1
# computes the edit distance between two strings A and B
# distM is the DP matrix, where each element contains the min
        edit cost up to that point
# P is the path marix, where each element contains T(op),
        L(eft), D(iagonal) indicating
# which previous element minimized the cost for the current
        entry
def editdist(A,B):

    # initialize distM and P
    for i in 1:length(A)+1:
        distM[i][0] = i
        P[i][0] = 'T'
    for j in 1:length(B)+1:
        distM[0][j] = j
        P[0][j] = 'L'
```

```
# fill in distM and P matrices
    for i in 1:length(A)+1
        for j in 1:length(B)+1:
            insertcost = distM[i-1][j] + 1
            deletecost = distM[i][j-1] + 1
            subscost = distM[i-1][j-1] + simplecost(A[i-1],
B[j-1])
            minvalue, minindex = min(insertcost, deletecost,
subscost]
            distM[i][j] = minvalue
            if minindex == 0:
                P[i][j] = 'T'
            elif minindex == 1:
                P[i][j] = 'L'
            else:
                P[i][j] = 'D'
    # return the bottom-rightmost entry
    return(distM[length(A)][length(B)])


# this will get us the optimal path, which is a list of (i,j) pairs
        defining
# the asterisk locations
def getpath(P):
    i,j=length(A), length(B)  # start from the bottom-right
    while (i!=0 and j!=0):
        path.append((i,j))
        if P[i][j] == 'D':
            i -= 1
            j -= 1
        elif P[i][j] == 'T':
            i -= 1
        else:
            j -= 1
    return(path)
```

EP 2 378 514 A1

EP 2 378 514 A1

**EUROPEAN SEARCH REPORT**

Application Number

EP 11 00 2457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAGENDRA GOEL ET AL: "Approaches to automatic lexicon learning with limited training examples", ACOUSTICS SPEECH AND SIGNAL PROCESSING (ICASSP), 2010 IEEE INTERNATIONAL CONFERENCE ON, IEEE, PISCATAWAY, NJ, USA, 14 March 2010 (2010-03-14), pages 5094-5097, XP031697012, ISBN: 978-1-4244-4295-9 * abstract * * page 5094, right-hand column, paragraph 2 * * page 5095, left-hand column, paragraph 2 - right-hand column, paragraph 1 * * page 5096, right-hand column, paragraph 3 - page 5097, left-hand column, paragraph 1 * | 1-20 | INV. G10L15/18 |
| A | US 2007/038453 A1 (YAMAMOTO TAKANORI [JP] ET AL) 15 February 2007 (2007-02-15) * abstract * * page 3, paragraph [0034]-[0040] * * page 5, paragraph [0075] - page 6, paragraph [0076] * * figures 1-3,9-10 * | 1,17,20 | |
| A | BISANI ET AL: "Joint-sequence models for grapheme-to-phoneme conversion", SPEECH COMMUNICATION, ELSEVIER SCIENCE PUBLISHERS, AMSTERDAM, NL, vol. 50, no. 5, 20 January 2008 (2008-01-20), pages 434-451, XP022559911, ISSN: 0167-6393 * abstract * | 8,9 | |

TECHNICAL FIELDS SEARCHED (IPC)

G10L

The present search report has been drawn up for all claims

| Place of search | Date of completion of the search | Examiner |
|---|---|---|
| Munich | 30 June 2011 | Greiser, Norbert |

EPO FORM 1503 03.82 (P04C01)

## ANNEX TO THE EUROPEAN SEARCH REPORT
## ON EUROPEAN PATENT APPLICATION NO.

EP 11 00 2457

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2011

| Patent document cited in search report | Publication date | Patent family member(s) | Publication date |
|---|---|---|---|
| US 2007038453 A1 | 15-02-2007 | JP 2007047412 A | 22-02-2007 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. BISANI ; H. NEY.** Joint-Sequence Models for Grapheme-to-Phoneme Conversion. *Speech Communication,* May 2008, vol. 50 (5), 434-451